# EUROPÄISCHE PATENTSCHRIFT

(11) **EP 2 029 376 B1**
(45) Veröffentlichungstag und Bekanntmachung des Hinweises auf die Patenterteilung: **13.10.2010**
(21) Anmeldenummer: 07729394.2
(22) Anmeldetag: 22.05.2007
(51) Int. Cl.: B60G 7/00

(54) **VERFAHREN ZUM HERSTELLEN EINES IM QUERSCHNITT U-FÖRMIGEN LENKERS AUS BLECH FÜR EINE PKW-MEHRLENKERACHSE**
METHOD FOR PRODUCTION OF A LINK ROD WITH U-SHAPED CROSS SECTION FROM SHEET METAL FOR A CAR MULTI-LINK AXLE
PROCÉDÉ DE PRODUCTION D'UN BRAS DE SUSPENSION EN TÔLE À SECTION EN U POUR ESSIEU MULTIBRAS DE VÉHICULE AUTOMOBILE

(30) Priorität: 20.06.2006 DE 102006028713
(43) Veröffentlichungstag der Anmeldung: 04.03.2009
(73) Patentinhaber: ThyssenKrupp Umformtechnik GmbH, 33647 Bielefeld (DE)
(72) Erfinder: RUNTE, Klaus, 33615 Bielefeld (DE); SUDOWE, Ulf, 49124 Georgsmarienhütte (DE); KRÖGER, Matthias, 32479 Hille (DE); WÄCHTER, Udo, 49134 Wallenhorst (DE)
(74) Vertreter: Cohausz & Florack
(86) Internationale Anmeldenummer: PCT/EP2007/054955
(87) Internationale Veröffentlichungsnummer: WO 2007/147695

(56) Entgegenhaltungen:
- EP-B1- 1 237 740
- WO-A-02/074562
- DE-A1- 3 006 240
- DE-A1- 10 334 192
- DE-U- 1 859 440
- DE-U1- 20 317 345
- JP-A- 2 185 813
- JP-A- 8 233 009
- JP-A- 62 006 808
- US-A- 1 445 850
- US-A1- 2002 162 297

## Beschreibung

Die Erfindung betrifft ein Verfahren zum Herstellen eines von einer einteiligen Blechschale gebildeten, im Querschnitt U-förmigen Lenkers für eine PKW-Mehrlenkerachse, bei dem die Blechschale als Formteil zweier spiegelbildlich zueinander angeordneten Teilschalen und eines diese Teilschalen verbindenden Rückens ausgebildet ist und an ihren beiden Enden Lageraugen aufweist, die jeweils von einem Paar fluchtender Löcher in den Teilschalen mit an den Rändern der Löcher vorgesehenen innerseitige Lagertragflächen bildenden Kragen gebildet sind.

Lenker für die Aufhängung eines federnd in einem Fahrzeug abgestützten Laufrades sind in verschiedenen Ausführungen bekannt. Sie haben die Aufgabe, das beim Fahren sich gegenüber dem Fahrzeug bewegende Rad zu führen. Deshalb kommt es darauf an, dass diese Lenker bei leichtem Gewicht eine hohe Steifigkeit haben. Außerdem sollen sie wegen des beengten Bauraumes möglichst schlank sein. Diese Forderungen werden im Vergleich zu massiven Lenkern vor allem von Blechschalen gebildeten Lenkern erfüllt.

Ein aus der Patentliteratur bekannter Lenker der eingangs genannten Art (DE 103 34 192 A1) lässt sich auch vergleichsweise einfach durch einen Ziehvorgang und anschließenden Biegevorgang herstellen. Eine aufwendigere Fertigungsstufe durch Verschweißen der Teilschalen entfällt also. Bei diesem Lenker sind allerdings nur einfache Löcher für Lageraugen vorgesehen. Das bedeutet, dass zusätzliche Maßnahmen für die Aufnahme der Lagerbuchsen entweder an den Löchern oder den Lagerbuchsen selbst vorgenommen werden müssen. Auch ist seine Steifigkeit wegen der einfachen Lochungen für die Lageraugen nicht optimal. Ob ein solcher Lenker Eingang in die Praxis gefunden hat, ist nicht bekannt.

Bei einem bekannten Verfahren zum Herstellen eines Lenkers der eingangs genannten Art (WO 02/074562 A2) werden in einem flachen Blechzuschnitt Löcher mit innenseitigen Lagertragflächen geformt. Dann werden in zwei aufeinander folgenden Verfahrensschritten der erste Schenkel des späteren U-Profils und dann der zweite Schenkel des späteren U-Profils jeweils um 90° umgebogen, so dass der beide Schenkel verbindende Rücken entsteht und beide Schenkel parallel zueinander liegen. Bei dieser Art der Fertigung ist es schwierig, die gemeinsamen Lagerflächen bildenden Löcher exakt zueinander auszurichten.

Der Erfindung liegt die Aufgabe zu Grunde, ein Verfahren für die Herstellung eines Lenkers für eine PKW-Mehrlenkerhinterachse aus einem Blechzuschnitt zu schaffen, das bei schlanker Bauform des Lenkers mit integrierten Lagertragflächen leicht durchgeführt werden kann. Insbesondere soll die Fertigung des Lenkers bei andauernder Anbindung an einem von einem Coil abgewickelten Band erfolgen können.

Diese Aufgabe wird mit einem Verfahren der eingangs genannten Art durch folgende Merkmale gelöst:
- In einem Blechzuschnitt wird der Rücken des späteren U-Profils geformt.
- Der erste Schenkel des späteren U-Profils wird um 90° umgebogen.
- Der umgebogene erste Schenkel wird an seinen beiden Enden gelocht und die Ränder der Löcher werden nach außen unter Bildung von Kragen mit innenseitigen Lagertragflächen umgeformt.
- Der zweite Schenkel des späteren U-Profils wird umgebogen, so dass er zum ersten Schenkel parallel liegt.
- Der umgebogene zweite Schenkel wird an seinen beiden Enden gelocht und die Ränder der Löcher nach außen unter Bildung von innenseitigen Lagertragflächen umgeformt, wobei die dafür benötigten Loch- und Formwerkzeuge die Löcher im ersten Schenkel durchgreifen und von diesen geführt werden.

Das erfindungsgemäße Verfahren zeichnet sich dadurch aus, dass ausschließlich durch Umformungen ein schlanker Lenker (kleine Innenabstand der Schenkel) mit großflächigen Lagertragflächen geschaffen wird. Trotz des geringen innenseitigen Abstandes der Schenkel können wegen der verschiedenen Fertigungsstufen unter Berücksichtigung der Zugänglichkeit der Schenkel problemlos die außenseitigen Kragen mit den Lagertragflächen geformt werden.

Die Formgebung des Rückens erfolgt in der ersten Stufe der Formgebung vorzugsweise durch Tiefziehen oder Pressen. Am Ende der Fertigung sollte der Lenker zur Verbesserung seiner Maßgenauigkeit noch kalibriert werden.

Besonders vorteilhaft ist es, wenn die Fertigung der Lenker "coil-fallend" erfolgt, d.h. an einem vom Coil abgewickelten Band erfolgt. Auch bei andauernder Anbindung des für den Lenker vorgesehenen Blechteils am Band lassen sich die verschiedenen Fertigungsschritte durchführen. Dies geschieht nach einer Ausgestaltung auf folgende Art und Weise:
- Das Blechteil wird mit seinen späteren Schenkeln im Blechband freigeschnitten, so dass es nur noch mit den Enden seines späteren Rückens mit dem Blechband verbunden ist.
- Der Rücken wird mit U-förmigem Querschnitt geformt, wobei die Schenkel in der Blechebene verbleiben oder in eine parallele Lage dazu verlagert werden.
- Der erste Schenkel wird um 90° umgebogen, so dass er fluchtend in den angrenzenden Längsrand des Rückens übergeht.
- Das komplette Blechteil wird im Blechband unter Verdrillung der an den Enden des Rückens angebundenen Bereiche um 90° verdreht, so dass der umgebogene Schenkel wieder in der Blechbandebene oder parallel dazu liegt.
- Nach der Lochung des ersten Schenkels und dem Umbiegen der Ränder der Löcher wird das komplette Blechteil zurückgedreht.
- Der zweite Schenkel wird um 90° umgebogen, so dass er fluchtend in den angrenzenden Längsrand des Rückens übergeht und parallel zum ersten Schenkel liegt.
- Das komplette Blechteil wird im Blechband unter Verdrillung der an den Enden des Rückens angebundenen Bereiche um 90° verdreht, so dass beide Schenkel parallel zur Blechbandebene liegen.
- Es erfolgt die Lochung des zweiten Schenkels und das Umbiegen der Ränder der Löcher über die Löcher im ersten Schenkel.
- Die Lochränder werden gemeinsam fluchtend kalibriert.
- Das zum Lenker fertig gestellte Blechteil wird an den Enden des Rückens vom Blechband getrennt.

Bei diesem Verfahren erfolgt die Formgebung und die Orientierung des Blechteils zur Arbeitsrichtung in optimaler Weise. Damit die Arbeitsrichtung nur von einer Seite des Bandes aus erfolgt, werden die Drehrichtungen so gewählt, dass die Arbeitsrichtung für alle Umformungen die Gleiche ist.

Im Folgenden wird die Erfindung anhand einer ein Ausführungsbeispiel darstellenden Zeichnung näher erläutert. Im Einzelnen zeigen:
- Fig. 1: ein Ausführungsbeispiel eines erfindungsgemäßen Lenkers in perspektivischer Darstellung und
- Fig. 2 a-e: eine Abfolge der einzelnen Fertigungsstufen, links in Draufsicht und rechts im Schnitt nach Linie I-I der linken Darstellung.

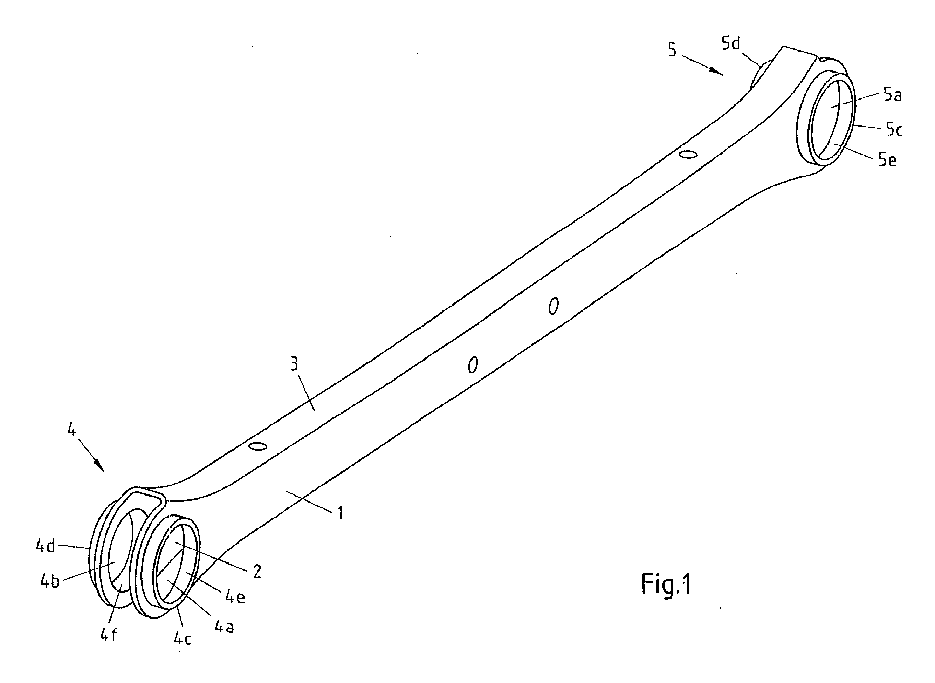

Der in Fig. 1 dargestellte Lenker ist aus einer einteiligen Blechschale aus Stahl geformt. Sein Querschnittsprofil ist U-förmig. Die einteilige Blechschale besteht also aus zwei die Schenkel des U-Profils bildenden Teilschalen 1, 2 und einem den Verbindungssteg der Schenkel bildenden und damit die Teilschalen 1, 2 verbindenden Rücken 3. An den Enden des Lenkers sind Lageraugen 4, 5 vorgesehen. Die Lageraugen 4, 5 werden von in den Teilschalen 1, 2 ausgebildeten Löchern 4a, 4b, 5a, 5b gebildet, deren Ränder unter Bildung von äußeren Kragen 4c, 4d, 5c, 5d mit innenseitigen Lagertragflächen 4e, 4f, 5e, 5f nach außen umgebogen sind.

Der Lenker hat eine schlanke Bauform. Typische Längen liegen bei 300 - 500 mm. Die Breite (Abstand der Außenseiten der Teilschalen 1, 2) liegt bei 30 - 40 mm bei einer Materialstärke des aus Stahl bestehenden Bleches von 2,0 bis 2,5 mm.

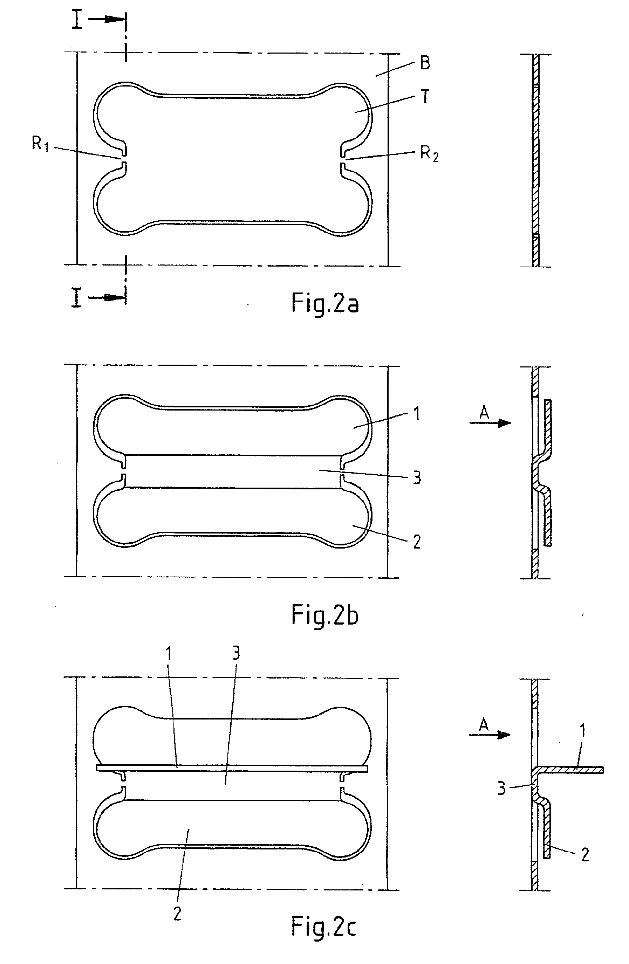

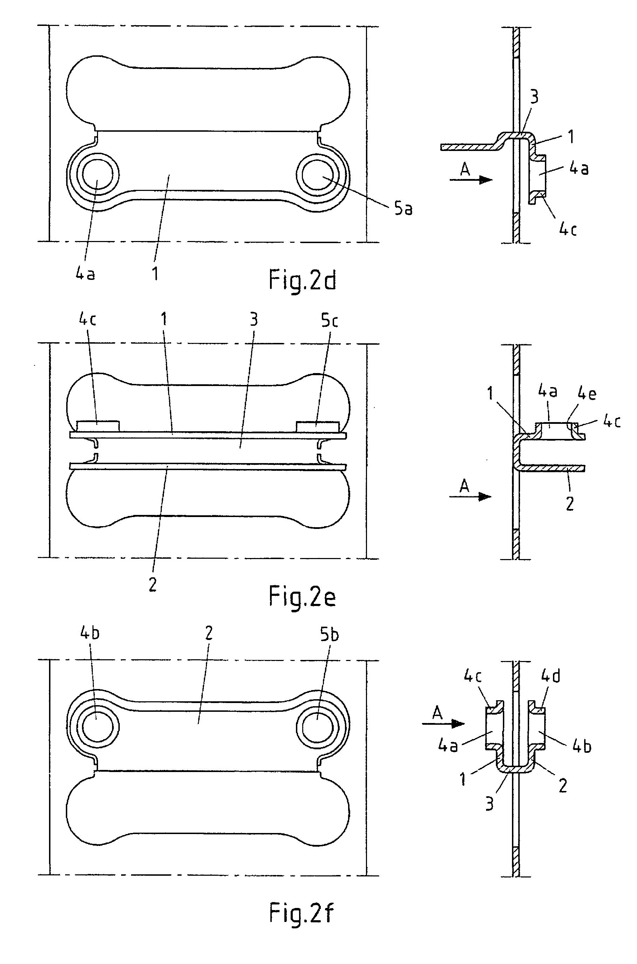

Die Herstellung eines solchen Lenkers erfolgt bis auf die Herstellung der Löcher für die Lageraugen ausschließlich durch Umformung und vorzugsweise bei andauernder Anbindung an einem von einem Coil abgezogenen Band. Wie dies im Einzelnen geschieht, ist in Fig. 2a - 2e dargestellt. Bei dieser Art der Fertigung erfolgt die komplette Fertigung ausschließlich von einer Bandseite aus, wie in den einzelnen Figuren die Pfeile A für die Arbeitsrichtung zeigen.

Im ersten Schritt der Fig. 2a wird ein für die einteilige Blechschale benötigtes Blechteil T im Blechband B freigeschnitten, so dass es nur noch mit den Endbereichen R₁, R₂ seines späteren Rückens 3 mit dem Blechband B verbunden ist.

Im zweiten Fertigungsschritt der Fig. 2b erfolgt die Formgebung des späteren Rückens 3. Die Formgebung erfolgt durch Tiefziehen oder Pressen. Dabei werden entweder die späteren Teilschalen 1, 2 aus der Blechbandebene herausbewegt, wobei der Rücken 3 in der Blechbandebene verbleibt oder Rücken 3 wird aus der Blechbandebene herausgedrückt und die Teilschalen 1, 2 verbleiben in der Blechbandebene.

Im nächsten Fertigungsschritt der Fig. 2c wird der Schenkel für die erste Teilschale 1 um 90° umgebogen, so dass sie fluchtend in den angrenzenden Rand des Rückens 3 übergeht.

Dann erfolgt im Fertigungsschritt 2d eine Drehung des kompletten Blechteils T um 90°, wobei eine Materialverdrillung des angebundenen Materials an den Enden R₁, R₂ des Rückens 3 erfolgt, so dass die Teilschale 1 parallel zur Blechbandebene oder sogar in der Blechbandebene zu liegen kommt. In dieser Lage der Teilschale 1 erfolgen an den Enden der Teilschale 1 die Herstellung der Löcher 4a, 5a und das Umbiegen ihrer Ränder, so dass Kragen 4c, 5c mit innenseitigen Lagertragflächen 4e, 5e entstehen.

Dann wird gemäß Fig. 2e das komplette Blechteil T wieder zurückgedreht und dann der Schenkel für die zweite Teilschale 2 um 90° umgebogen, so dass sie der ersten Teilschale 1 gegenüberliegt.

Im nächsten Fertigungsschritt gemäß Fig. 2f erfolgt unter Verdrillung der Materialanbindungen an den Enden R₁, R₂ des späteren Rückens 3 eine Verdrehung des kompletten Blechteils T um 90°, so dass die erste Teilschale 1 der Arbeitsrichtung A zugekehrt liegt. In dieser Lage erfolgt dann die Lochung und die Formgebung der Lochränder in der zweiten Teilschale 2, indem die dafür benötigten Loch- und Umformwerkzeuge aus der unveränderten Arbeitsrichtung A über die Löcher 4a, 5a in der ersten Teilschale 1 zugeführt werden.

Im letzten, nicht weiter dargestellten Fertigungsschritt wird das komplette Blechteil T wieder zurückgedreht. Nach einer Kalibrierung über die fluchtenden Ränder der Löcher 4a, 4b, 5a, 5b und Abtrennen des Blechteils T an den Enden R₁, R₂ vom Blechband B ist der Lenker fertig.

## Patentansprüche

1. Verfahren zum Herstellen eines von einer einteiligen Blechschale gebildeten, im Querschnitt U-förmigen Lenkers für eine PKW-Mehrlenkerachse, bei dem die Blechschale als Formteil zweier spiegelbildlich zueinander angeordneten Teilschalen (1, 2) und eines diese Teilschalen (1, 2) verbindenden Rückens (3) ausgebildet ist und an ihren beiden Enden Lageraugen (4, 5) aufweist, die jeweils von einem Paar fluchtender Löcher (4a, 4b, 5a, 5b) in den Teilschalen (1, 2) mit an den Rändern der Löcher (4a, 4b, 5a, 5b) vorgesehenen innerseitige Lagertragflächen(4e, 4f, 5e, 5f) bildenden Kragen (4c, 4d, 5c, 5d) gebildet sind,
**gekennzeichnet durch** folgende Fertigungsschritte:
• In einem Blechzuschnitt wird der Rücken des späteren U-Profils geformt.
• Der erste Schenkel des späteren U-Profils wird um 90° umgebogen.
• Der umgebogene erste Schenkel wird an seinen beiden Enden gelocht und die Ränder der Löcher werden nach außen unter Bildung von Kragen mit innenseitigen Lagertragflächen umgeformt.
• Der zweite Schenkel des späteren U-Profils wird umgebogen, so dass er zum ersten Schenkel parallel liegt.
• Der umgebogene zweite Schenkel wird an seinen beiden Enden gelocht und die Ränder der Löcher nach außen unter Bildung von Kragen mit innenseitigen Lagertragflächen umgeformt, wobei die dafür benötigten Loch- und Formwerkzeuge die Löcher im ersten Schenkel durchgreifen und von diesen geführt werden.

2. Verfahren nach Anspruch 1,
**dadurch gekennzeichnet, dass** die Formgebung des Rückens durch Tiefziehen oder Pressen erfolgt.

3. Verfahren nach Anspruch 1 oder 2,
**dadurch gekennzeichnet, dass** der Lenker nach Fertigstellung der Löcher kalibriert wird.

4. Verfahren nach einem der Ansprüche 1 bis 3,
**dadurch gekennzeichnet, dass** die verschiedenen Fertigungsschritte bei andauernder Anbindung des umzuformenden Blechteils an einem Blechband durchgeführt werden:
• Das Blechteil wird mit seinen späteren Schenkeln im Blechband freigeschnitten, so dass es nur noch mit den Enden seines späteren Rückens mit dem Blechband verbunden ist.
• Der Rücken wird mit U-förmigem Querschnitt geformt, wobei die Schenkel in der Blechbandebene verbleiben oder in eine parallele Ebene dazu verlagert werden.
• Der erste Schenkel wird um 90° umgebogen, so dass er fluchtend in den angrenzenden Längsrand des Rückens übergeht.
• Das komplette Blechteil wird im Blechband unter Verdrillung der an den Enden des Rückens angebundenen Bereiche um 90° verdreht, so dass der umgebogene Schenkel wieder in der Blechbandebene oder parallel dazu liegt.
• Nach der Lochung des ersten Schenkels und dem Umbiegen der Lochränder wird das komplette Blechteil zurückgedreht.
• Der zweite Schenkel wird um 90° umgebogen, so dass er fluchtend in den angrenzenden Längsrand des Rückens übergeht.
• Das komplette Blechteil wird im Blechband unter Verdrillung der an den Enden des Rückens angebundenen Bereiche um 90° verdreht, so dass beide Schenkel parallel zur Blechbandebene liegen.
• Es erfolgt die Lochung des zweiten Schenkels und das Umbiegen der Lochränder über die Löcher im ersten Schenkel.
• Die Lochränder werden gemeinsam fluchtend kalibriert.
• Das zum Lenker fertig gestellte Blechteil wird an den Enden des Rückens vom Blechband getrennt.

5. Verfahren nach Anspruch 4,
**dadurch gekennzeichnet, dass** die Drehrichtungen beim Verdrehen des Blechteils im Blechband so gewählt werden, dass die Arbeitsrichtung für alle Umformungen die Gleiche ist.

## Claims

1. A method for producing a link rod for a multi-link axle for a passenger car, said rod having a U-shaped cross section made from a one-piece sheet metal shell, wherein the sheet metal shell is formed as a shaped part comprising two part shells (1, 2) arranged in a mirror-inverted manner to each other and a back (3) connecting said part shells (1, 2), and comprising bearing eyes (4, 5) at both of their ends, the bearing eyes each being formed by a pair of aligned holes (4a, 4b, 5a, 5b) in the part shells (1, 2) having collars (4c, 4d, 5c, 5d) provided at the edges of the holes (4a, 4b, 5a, 5b) which collars form inner bearing support surfaces (4e, 4f, 5e, 5f),
**characterized by** the following manufacturing steps:
• the back of what is to become the U-shaped profile is formed in a sheet metal blank;
• the first limb of what is to become the U-shaped profile is bent by 90°;
• the bent first limb is holed at both of its ends and the edges of the holes are formed outward thus forming collars having inner bearing support surfaces;
• the second limb of what is to become the U-shaped profile is bent so as to be parallel to the first limb;
• the bent second limb is holed at both of its ends and the edges of the holes are formed outward thus forming collars having inner bearing support surfaces, wherein the holing and forming tools required therefore pass through the holes in the first limb while being guided by them.

2. The method according to claim 1,
**characterized in that** forming of the back is performed by deep drawing or pressing.

3. The method according to claim 1 or 2,
**characterized in that** the link rod is calibrated after the holes have been finished.

4. The method according to one of claims 1 to 3,
**characterized in that** the different manufacturing steps are performed while the sheet metal part to be formed remains connected to a sheet metal strip:
• the sheet metal part is cut out of the sheet metal strip at its future limbs so that only the ends of what is to be the back are connected to the sheet metal strip;
• the back is formed with a U-shaped section, wherein the limbs remain in the plane of the sheet metal strip or are displaced into a plane in parallel therewith;
• the first limb is bent by 90° so that it merges in an aligned manner with the adjacent longitudinal edge of the back;
• the entire sheet metal part is rotated by 90° in the sheet metal strip while twisting the connecting portions at the ends of the back so that the bent limb again lies in the plane of the sheet metal strip or in parallel therewith;
• after holing the first limb and bending the edges of the holes the entire sheet metal part is rotated back;
• the second limb is bent by 90° so that it merges in an aligned manner with the adjacent longitudinal edge of the back;
• the entire sheet metal part is rotated by 90° in the sheet metal strip while twisting the connecting portions at the ends of the back so that both limbs lie in parallel with the sheet metal strip;
• holing of the second limb is performed and then bending of the edges of the holes via the holes in the first limb;
• the edges of the holes are jointly calibrated so as to be aligned;
• the sheet metal part finished as a link rod is cut from the sheet metal strip at the ends of the back.

5. The method according to claim 4,
**characterized in that** the directions of rotation when rotating the sheet metal part in the sheet metal strip are chosen such that the working direction is the same for all shaping processes.

## Revendications

1. Procédé de fabrication d'un bras de suspension à section transversale en U, formé d'une pièce par une coque de tôle, pour un essieu multibras de véhicule automobile, dans lequel la coque de tôle, en tant que pièce préformée, est composée de deux parties de coque (1, 2), disposées de manière inversée l'une par rapport à l'autre, et d'un dos (3) reliant ces parties de coque (1, 2), et présente, à ses deux extrémités, des logements de paliers (4, 5), qui sont formés respectivement par une paire de perforations en alignement (4a, 4b, 5a, 5b), pratiquées dans les parties de coque (1, 2), avec des collerettes (4c, 4d, 5c, 5d), qui, prévues sur les bords des perforations (4a, 4b, 5a, 5b), forment des surfaces d'appui (4e, 4f, 5e, 5f) sur la face intérieure, **caractérisé par** les phases de fabrication suivantes :
- le dos du futur profilé en U est formé dans une coupe de tôle,
- la première aile du futur profilé en U est pliée à 90°,
- la première aile pliée est perforée à ses deux extrémités et les bords des perforations sont façonnés vers l'extérieur en forme de collerettes avec des surfaces d'appui sur la face intérieure,
- la deuxième aile du futur profilé en U est pliée de sorte qu'elle soit orientée parallèlement à la première aile,
- la deuxième aile pliée est perforée à ses deux extrémités et les bords des perforations sont façonnés vers l'extérieur en forme de collerettes avec des surfaces d'appui sur la face intérieure, sachant que les outils de perforation et de formage nécessaires traversent les perforations pratiquées dans la première aile et sont guidés par celles-ci.

2. Procédé selon la revendication 1, **caractérisé en ce que** le formage du dos est exécuté par emboutissage ou par pression.

3. Procédé selon revendication 1 ou 2, **caractérisé en ce que** le bras est calibré après la réalisation des perforations.

4. Procédé selon l'une des revendications 1 à 3, **caractérisé en ce que**, pendant les différentes phases de fabrication, la pièce de tôle à former est constamment reliée à un feuillard :
- la pièce en tôle est découpée dans le feuillard et dégagée avec ses futures branches de sorte qu'elle ne soit plus reliée audit feuillard que par les extrémités de son futur dos,
- le dos est formé avec une section transversale en U, les ailes demeurant sur le plan du feuillard ou étant décalées sur un plan parallèle à celui-ci,
- la première aile est pliée à 90° de sorte qu'elle se raccorde en alignement avec le bord longitudinal adjacent,
- la pièce en tôle complète est tournée de 90° dans le feuillard, avec torsion de la section reliée par les extrémités du dos, de sorte que l'aile pliée se trouve de nouveau située sur le plan du feuillard ou parallèlement à celui-ci,
- après la perforation de la première aile et le pliage des bords des perforations, la pièce de tôle complète est retournée,
- la deuxième aile est pliée à 90° de sorte qu'elle se raccorde en alignement avec le bord longitudinal du dos adjacent,
- la pièce en tôle complète est tournée de 90° dans le feuillard, avec torsion de la section reliée par les extrémités du dos, de sorte que les deux ailes soient parallèles au plan du feuillard,
- la perforation de la deuxième aile et le pliage des bords des perforations sont exécutés via les perforations pratiquées dans la première aile,
- les bords des perforations sont calibrés ensemble, en alignement,
- la pièce en tôle transformée en bras est séparée du feuillard aux extrémités du dos.

5. Procédé selon la revendication 4, **caractérisé en ce que** les directions de rotation lors de la torsion de la pièce en tôle dans le feuillard sont sélectionnées de sorte que la direction de travail soit toujours la même pour tous les formages.
